# EUROPEAN PATENT APPLICATION

(11) **EP 3 178 699 A1**
(43) Date of publication of application: **14.06.2017**
(21) Application number: 16203312.0
(22) Date of filing: 09.12.2016
(51) Int. Cl.: B60Q 1/26, B60Q 1/38, G03B 21/14, F21S 8/10, F21V 5/04

(54) **AUTOMOTIVE LIGHT**

(30) Priority: 11.12.2015 IT UB20156803
(71) Applicant: Automotive Lighting Italia S.p.A., 10078 Venaria Reale (Torino) (IT)
(72) Inventor: BACCARIN, Davide, 33028 TOLMEZZO (IT); MARCHESIN, Stefano, 33028 TOLMEZZO (IT); TRIVELLIN, Nicola, 33028 TOLMEZZO (IT)
(74) Representative: Bellemo, Matteo

(57) **Abstract**

An automotive light (1) comprising a LASER projection device (4) capable of tracing out at least one luminous pattern (d) of predetermined shape, outside the automotive light (1) and directly on the road surface or other flat surface (P) external and adjacent to the vehicle (100) accommodating said automotive light (1); said LASER projection device (4) comprising at least one LASER projector (6) which is capable of simultaneously emitting a plurality of output laser beams (r) that are appropriately angled from one another and are capable of tracing out/ drawing said luminous pattern of predetermined shape (d) directly onto the road surface (P) or other flat surface external and adjacent to the vehicle (100) accommodating the automotive light (1).

## Description

The invention relates to an automotive light.

More in detail, the present invention relates to a rear light for cars, use to which the following description will make explicit reference without however loosing in generality.

As it is known, rear lights for cars usually comprise: a substantially basin-shaped, rear casing which is structured so as to be stably recessed into a compartment specially formed in the rear part of the vehicle body; a front half-shell which is placed to close the mouth of the casing so as to surface outside of the vehicle body, and is provided with a series of transparent or semi-transparent portions, usually of a different colour to one another; and a series of lighting assemblies which are located inside the casing, each immediately underneath a respective transparent or semi-transparent portion of the front half-shell, so as to backlight the same transparent or semi-transparent portion of the half-shell.

Generally speaking, each lighting assembly is univocally associated to a specific light signal and it is therefore structured so as to emit a light beam that, after having crossed the front half-shell, complies with the type-approval specifications concerning colour, intensity and space distribution of the emitted light associated with said light signal.

In the last few years, some automotive light manufacturers have started developing automotive lights that are capable of projecting on the road surface adjacent to the vehicle, i.e. directly on the ground or other flat surface external and adjacent to the vehicle, one or more arrow-shaped luminous patterns to be used as turn signal/ direction indicator in addition to the traditional blinking light signal directly emitted by the automotive light.

This type of lights is disclosed in GB2517790 patent application.

Unfortunately, tracing out arrows or other luminous patterns on the ground by means of a movable LASER beam has turned out to be extremely complicated and expensive. As a matter of fact, the servomotors used to move the deflector mirrors of the LASER projector are very sensitive to mechanical vibrations and have a very short average life when they are fitted on board a normal car.

On the other hand, the use of GoBO projectors (acronym standing for Go Before Optics) has not led to the expected results.

Experimental tests, in fact, have shown that GoBO projectors are not capable of projection, on the ground, an arrow or other luminous pattern having a light density by surface unit and a contrast that are sufficient to make the luminous pattern fully visible in the day light, with all problems that this entails.

Aims of the present invention is to provide a rear light for cars which is capable of projecting on the road surface adjacent to the vehicle, i.e. directly on the ground or other flat surface external and adjacent to the vehicle, arrows or other luminous patterns that are perfectly visible also in the day light.

In compliance with the above aims, according to the present invention there is provided an automotive light according to Claim 1 and preferably, though not necessarily, according to any of the dependant claims.

The invention will now be described with reference to the accompanying drawings, which show a non-limiting embodiment thereof, wherein:
- Figure 1 is a perspective view of a car provided, in the rear part, with automotive lights realized according to the teaching s of the invention;
- Figure 2 is a perspective view of one of the two automotive lights located in the rear part of the car shown in Figure 1, with transparent parts and parts removed for clarity;
- Figure 3 is an exploded perspective view of the automotive light shown in Figure 2; whereas
- Figure 4 is a perspective view of a component of the automotive light shown in Figures 2 and 3, with parts in section and parts removed for clarity.

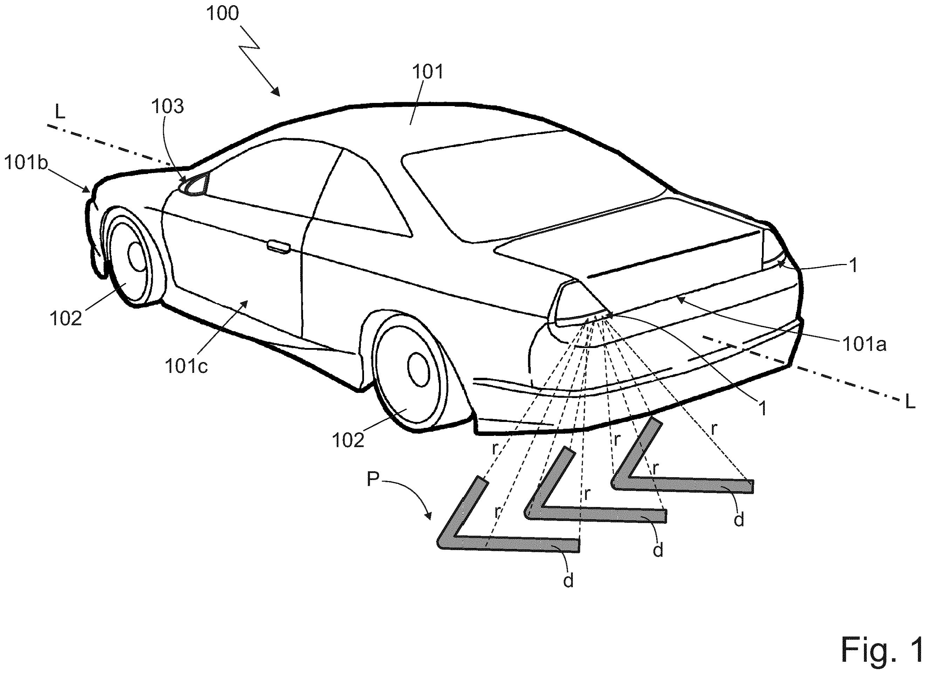

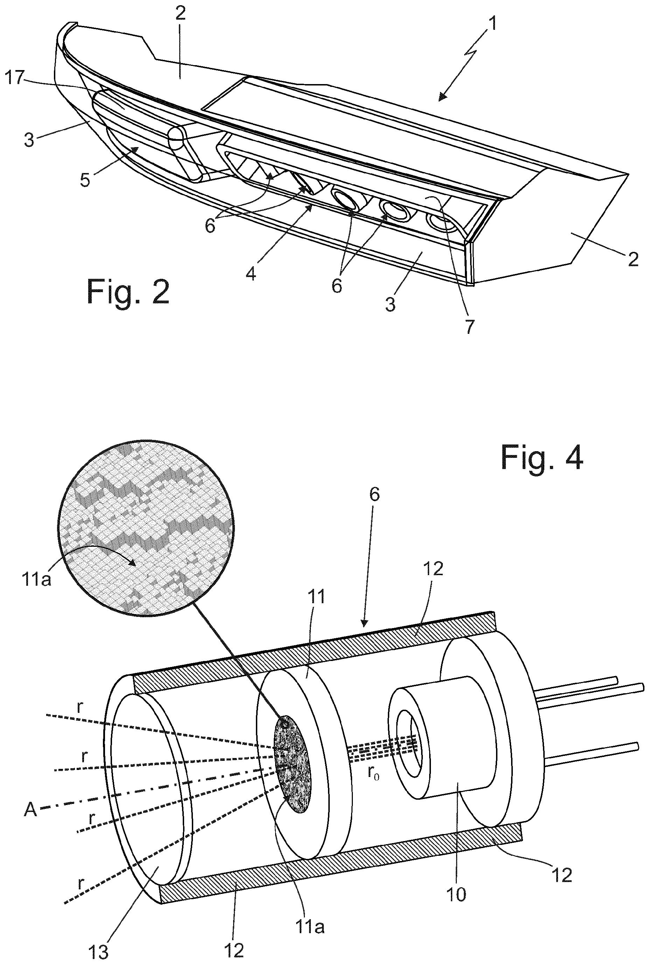

With reference to figures 1 and 2, number 1 denotes as a whole, an automotive light preferably of the type designed to be fitted/mounted on a motor vehicle 100 for transporting items and/or people and which preferably has a vehicle body 101, an engine (not shown) and a series of ground-resting wheels 102.

More in detail, the automotive light 1 is preferably structured so as to be placed on the rear part 101a of the vehicle body 101 of a car 100 or a similar motor vehicle, namely an automotive rear light.

In the example shown, in particular, the automotive light 1 is preferably structured so as to be stably recessed into the rear part of the vehicle body 101 of a car 100 or similar motor vehicle.

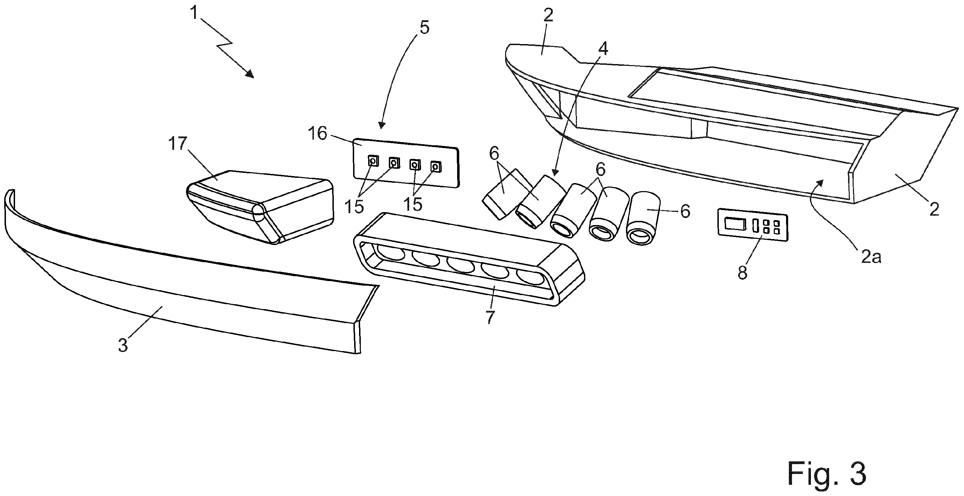

With particular reference to Figures 2 and 3, the automotive light 1 basically comprises: a substantially basin-shaped, rigid rear casing 2 which is preferably made of plastic material and is preferably structured so as to be at least partially recessed into a seat or compartment (not shown) specially formed in the rear part 101a of the vehicle body 101; and preferably also a front half-shell 3 preferably made of a plastic material and which is placed to close the mouth 2a of rear casing 2, preferably so as to surface, at same time, outside of the vehicle body 101, and is provided with one or more transparent or semi-transparent, optionally also coloured, areas/portions.

With reference to Figures 1, 2 and 3, inside the casing 2, the automotive light 1 moreover comprises at least one electrically-powered projector assembly 4 which is located inside the casing 2, in front of one of the transparent or semi-transparent portions of the front half-shell 3, and is capable of projecting, on command, one or more luminous patterns d of a predetermined shape outside of the automotive light 1 and directly onto the road surface P or other flat surface external and adjacent to the car 100 of other vehicle accommodating the automotive light 1.

More in detail, the luminous pattern/s preferably has/have the shape of an arrow or of another coded graphical sign that can be advantageously used as turn signal/direction indicator in addition to or as a replacement for the traditional blinking light signal.

Preferably, the automotive light 1 moreover comprises one or more electrically-powered auxiliary lighting assemblies 5 (a single lighting assembly in the example shown), each of which is located inside the rear casing 2, directly facing a corresponding transparent or semi-transparent portion of front half-shell 3, and is able to backlight, on command, the same transparent or semi-transparent portion of front half-shell 3.

With reference to Figures 2 and 3, in the example shown, in particular, the front half-shell 3 is preferably provided with two distinct transparent portions, preferably adjacent to one another and optionally also with a different colour.

The projector assembly 4 is located inside the casing 2, in front of a first transparent portion of front half-shell 3, so as to project one or more luminous patterns d directly outside of the automotive light 1, onto the road surface P or other flat surface external and adjacent to the vehicle accommodating the automotive light 1.

The auxiliary lighting assembly 5, on the other hand, is located inside the casing 2 in front of the second transparent portion of front half-shell 3, so as to be able to separately and autonomously backlight the second transparent portion of front half-shell 3, preferably while generating a light signal which is preferably of blinking type and additionally complies with the light emission specifications (colour, intensity, space distribution of the light) requested by the type-approval legislation for direction indicators.

With reference to Figures 2, 3 and 4, the projector assembly 4 in turn comprises at least one LASER projector 6 which is housed inside the casing 2 and is capable of simultaneously emitting a plurality of output laser beams r that are suitably angled to one another and are stationary in space, i.e. are stationary relative to the casing 2 and to the car 100 or other vehicle accommodating the automotive light 1. The output laser beams r, in addition, are able to cross the front half-shell 3 and, after having left the automotive light 1, are capable of tracing out/ drawing said luminous pattern d of given shape directly onto the road surface P or other flat surface external and adjacent to the car 100 or other vehicle accommodating the automotive light 1.

Obviously, the shape of the luminous pattern d depends on the space distribution of the laser beams r emitted by the LASER projector 6.

In the example shown, in particular, the projector assembly 4 is preferably provided with a plurality of independent LASER projectors 6, each of which is housed inside the casing 2 and is capable of simultaneously producing/emitting a plurality of output laser beams r stationary in space and suitably angled to one another, which cross the front half-shell 3 and are capable of tracing out/drawing, directly onto the road surface P or other flat surface external and adjacent to the car 100 or other vehicle accommodating the automotive light 1, a respective luminous pattern d whose shape depends on the space distribution of the laser beams r emitted by the LASER projector 6.

Preferably the various LASER projectors 6 are moreover arranged inside the rear casing 2, side by side to one another, so as to be able to trace out/draw, directly onto the road surface P or other flat surface external and adjacent to the car 100 or other vehicle accommodating the automotive light 1, a series of luminous patterns d arranged adjacent to one another. Furthermore, the luminous patterns d are preferably aligned one after the other, along a direction substantially perpendicular to the longitudinal axis L of the vehicle, i.e. to the forward direction of the vehicle.

More in detail, with particular reference to Figure 2, in the example shown the LASER projectors 6 are preferably fixed, in rigid manner and side by side to one another, on a same support structure 7 which, in turn, is fixed in rigid manner inside the casing 2, under the front half-shell 3.

With reference to Figure 3, in addition, the projector assembly 4 preferably comprises an electronic control unit 8 which is preferably housed inside the rear casing 2, and is able to sequentially activate the various LASER projectors 6, so as to trace out/draw in sequence the single luminous patterns d adjacent to one another, directly onto the road surface P or other flat surface external and adjacent to the car 100 or other vehicle accommodating the automotive light 1.

In other words, the electronic control unit 8 is preferably configured so as to switch on in sequence the single LASER projectors 6 one after the other, with a given time delay (e.g. 0,2 seconds), so as to project a sequence of luminous patterns d onto the road surface P or other flat surface external and adjacent to the car 100 or other vehicle accommodating the automotive light 1.

In addition, electronic control unit 8 is preferably also configured to switch off each LASER projector 6 immediately after having switched on the following and immediately adjacent LASER projector 6, so as to create, onto the road surface P or other flat surface external and adjacent to the car 100 or other vehicle accommodating the automotive light 1, a sequence of luminous patterns d that give to the observer the impression of moving on the road surface P or other flat surface external and adjacent to the car 100 or other vehicle accommodating the automotive light 1.

Alternatively, the electronic control unit 8 may be configures to simultaneously switch off all LASER projectors 6, with a given delay (e.g. 0.2 seconds) relative to the switching on of the last LASER projector 6.

In a different embodiment, the electronic control unit 8 could also be configured so as to switch on in sequence two or more LASER projectors 6 at a time.

With particular reference to Figure 4, each LASER projector 6, on the other hand, comprises: an electrically-powered LASER source 10 which is capable of emitting, on command, a main laser beam r₀ (i.e. a set of monochromatic and coherent light rays collimated in a highly concentrated straight beam) in a predetermined direction; at least one diffractive optical element 11, traditionally known as "DOE lens" (acronym of Diffractive Optical Element), which is located in front of the LASER source 10, i.e. between the front half-shell 3 and the LASER source 10, so as to be crossed by the main laser beam r₀ emitted by the LASER source 10; and preferably also a protective outer casing 12 having an oblong cavity inside which the LASER source 10 and the diffractive optical element 11 are stably accommodated.

More in detail, the LASER source 10 is capable of emitting, towards the diffractive optical element 11, a single laser beam r₀ (i.e. a set of monochromatic and coherent light rays collimated in a highly concentrated straight beam) along an optical axis A which is preferably locally substantially coinciding with, or in any case substantially parallel to, the longitudinal axis of the oblong cavity of protective casing 12.

The diffractive optical element 11, on the other hand, is located in front of the LASER source 10, substantially coaxial to optical axis A, and is structured so as to divide/partition the laser beam r₀ into a plurality of output laser beams r that come out of the diffractive optical element 11 on the opposite side with respect to the LASER source 10 and according to predetermined directions angled to one another, so as to cross the front half-shell 3 and trace out/draw, directly onto the road surface P or other flat surface external and adjacent to the car 100 or other vehicle accommodating the automotive light 1, said luminous pattern d of given shape. Obviously, the shape of the luminous pattern d depends on the space distribution of the output laser beams r.

More in detail, the preferably rear face 11a of the diffractive optical element 11 is preferably provided with a complex three-dimensional profile that causes the controlled and selective diffraction of the laser beam r₀ coming from the LASER source 10, so as to divide/partition the laser beam r₀ into a series of output laser beams r that leave the diffractive optical element 11 each collimated in a predetermined direction which is preferably inclined relative to the optical axis A of LASER source 10.

In addition, the face 11a of diffractive optical element 11 is moreover shaped/structured so that the output laser beams r, after having left the automotive light 1, have a predetermined space distribution allowing to trace out/draw a specific luminous patter d, directly onto the road surface P or other flat surface external and adjacent to the car 100 or other vehicle that accommodates with automotive light 1.

With reference to Figure 4, moreover the LASER projector 6 preferably also comprises at least one auxiliary front lens 13 which is placed in front of the diffractive optical element 11, preferably inside the oblong cavity of protective casing 12, so as to be crossed by the laser beams r coming from the diffractive optical element 11.

In the example shown, in particular, the protective casing 12 preferably has a cylindrical tubular shape and the LASER source 10 preferably consists of a LASER diode with a power preferably ranging between 0.5 and 25 watt, which is placed inside the protective casing 12, at the bottom of the oblong cavity of protective casing 12, so as to emit the laser beam r₀ parallely to the longitudinal axis of the oblong cavity.

The diffractive optical element 11, on the other hand, preferably consists of a transparent lenticular body, preferably made of plastic material, which is placed inside the oblong cavity of protective casing 12 substantially coaxial to the optical axis A of LASER source 10. Said transparent lenticular body has, on surface of one of the two larger faces, a complex three-dimensional profile formed by a myriad of microstructures, such as for example micro-projections and/or micro-grooves, which have dimensions substantially equal to those of the wavelength of the LASER light emitted by the LASER source 10, and are distributed according to a predetermined pattern capable of causing localized diffraction phenomena that divide/ partition the laser beam r₀ that crosses the transparent lenticular body, into a series of output laser beams r suitably collimated in different directions based on the complex three-dimensional profile.

More in detail, in the example shown, the complex three-dimensional profile is preferably made on the rear face 11a of the transparent lenticular body, i.e. on the face opposite to the LASER source 10.

Preferably, the complex three-dimensional profile present on surface of the transparent lenticular body 11 is furthermore shaped/structured so that the laser beams r, after having left the automotive light 1, have a space distribution allowing to trace out/draw, directly onto the road surface P or other flat surface external and adjacent to the car 100 or other vehicle accommodating the automotive light 1, a luminous arrow d or other luminous graphical symbol acting as direction indicator.

Finally, with reference to Figure 4, the auxiliary lens 13 preferably has a divergent geometry and is placed inside the oblong cavity of protective casing 12, spaced apart in front of the diffractive optical element 11, so as to be capable of spreading/opening the output laser beams r coming from the diffractive optical element 11.

With reference to Figure 3, the auxiliary lighting assembly 5, on the other hand, preferably comprises a series of LED diodes 15 (acronym for Light Emitting Diode) that are arranged inside the rear casing 2, spaced apart and side by side to one another, and are oriented so as to direct the light produced towards the second transparent portion of front half-shell 3.

Preferably, the switching on of the auxiliary lighting assembly 5 is simultaneous to the activation of the projector assembly 4.

In addition, the switching on of the LED diodes 15 can take place sequentially and/or in synchronization with the LASER projectors 6 of projector assembly 4.

More in detail, in the example shown the LED diodes 15 are preferably mounted on a same face of a supporting board 16 which is preferably stably fixed on bottom of rear casing 2 with the LED diodes 15 facing the front half-shell 3.

Preferably, the supporting board 16 furthermore incorporates the power supply and/or control circuits of LED diodes 15 and is preferably configured so as to switch on and off all the LED diodes 15 simultaneously and in synchronization with the projector assembly 4.

With reference to Figure 3, finally the lighting assembly 5 preferably also comprises a covering mask 17 made of a semi-transparent material and which is interposed between the LED diodes 15 and the front half-shell 3, and is structured so as to scatter the light beams coming from the LED diodes 15 preferably while hiding the supporting board 16.

Operation of automotive light 1 is easy inferable from what's written above and therefore does not require further explanations.

The advantages correlated to the special structure of the LASER projector/s 6 of projector assembly 4 are remarkable.

First of all, thanks to the presence of the diffractive optical element 11, the LASER projector 6 lacks the motor-driven mirrors or other movable parts, with all advantages that this entails.

In addition, the diffractive optical element 11 allows manufacturers to concentrate all the light emitted by the LASER source 11 inside the perimeter of the luminous pattern d, without losses of luminous flux. As a consequence, the intensity of the light onto the road surface P increases in an inversely proportional way to the area/extension of the luminous pattern d.

In other words, the smaller is the luminous pattern d traced out on the road surface P, the greater is the intensity of the luminous pattern d.

In addition, given the absence of luminous-flux losses due to shielding elements, the luminous pattern d traced out by the LASER projectors 6 will have a light density per surface unit significantly greater than the one that can be obtained with any GoBO-type projector.

In addition, thanks to the presence of the diffractive optical element 11, the laser beams r coming out of the LASER projector 6 are always perfectly collimated in the respective emission directions, therefore the luminous pattern d is always perfectly focused irrespective of variation of the distance of the LASER projector 6 from the road surface P.

In other words, the luminous pattern d enlarges as the distance between the LASER projector 6 and the road surface P increases, while remaining always focused.

Lastly the use of the diffractive optical element 11 allows manufacturers to produce LASER projectors 6 with particularly small sizes, thus enabling a reduction of the overall dimensions of the automotive light 1.

It is finally clear that changes and variations may be made to the automotive light 1 described above, without however departing from the scope of protection of the invention.

For example, the luminous pattern d of given shape could be generated jointly by two or more LASER projectors 6.

In other words, the two converging lines forming the light arrow can be traced out/drawn separately with two different LASER projectors 6.

Moreover, the automotive light 1 could be structured so as to be placed on the front part 101b or on the side 101c of the vehicle body 101 of a car, van, truck or any other vehicle for transporting items and/or people.

More in detail, in a different embodiment the automotive light 1 could be, for example, built in in the wing mirror 103 of the car 100.

## Claims

1. An automotive light (1) comprising a LASER projection device (4) capable of tracing out at least one luminous pattern (d) of predetermined shape, outside the automotive light (1) and directly onto the road surface or other flat surface (P) external and adjacent to the vehicle (100) accommodating said automotive light (1);
the automotive light (1) being **characterised in that** said LASER projection device (4) comprises at least one LASER projector (6) which is capable of simultaneously emitting a plurality of output laser beams (r) that are appropriately angled from one another and are capable of tracing out/drawing said luminous pattern of predetermined shape (d) directly onto the road surface (P) or other flat surface external and adjacent to the vehicle (100) accommodating the automotive light (1).

2. An automotive light according to claim 1, **characterised in that** said LASER projector (6) comprises a LASER source (10) capable of emitting a main laser beam (r₀) in a predetermined direction (A), and at least one diffractive optical element (11) which is located in front of the LASER source (10) so as to be crossed by said main laser beam (r₀); the diffractive optical element (11) being structured to divide/partition said main laser beam (r₀) into said plurality of output laser beams (r) able to trace out/draw said luminous pattern of predetermined shape (d).

3. An automotive light according to claim 2, **characterised in that** said LASER projector (6) additionally comprises a protective casing (12) which is provided with an oblong cavity inside which the LASER source (10) and the diffractive optical element (11) are stably accommodated.

4. An automotive light according to claim 2 or 3, **characterised in that** said LASER projector (6) additionally comprises at least one auxiliary lens (13) which is placed in front of the diffractive optical element (11) so as to be crossed by said output laser beams (r).

5. An automotive light according to claim 4, **characterised in that** the auxiliary lens (13) has a divergent geometry.

6. An automotive light according to any one of the preceding claims, **characterised in that** said diffractive optical element (11) comprises a transparent lenticular body that has, on surface of one (11a) of the two larger faces, a complex three-dimensional profile formed by a myriad of microstructures which have dimensions substantially equal to those of the wavelength of the LASER light emitted by the LASER source (10), and are distributed according to a predetermined pattern capable of causing localized diffraction phenomena that divide/partition said main laser beam (r₀) into said series of output laser beams (r).

7. An automotive light according to any one of the preceding claims, **characterised in that** said luminous pattern (d) is in the shape of an arrow or other luminous graphic symbol suitable to act as turn signal/direction indicator.

8. An automotive light according to any one of the preceding claims, **characterised in that** said LASER projection device (4) comprises a plurality of LASER projectors (6), each of which is capable of tracing out/ drawing a respective luminous pattern of predetermined shape (d) directly onto the road surface (P) or other flat surface external and adjacent to the vehicle (100) accommodating the automotive light (1); the luminous patterns of predetermined shape (d) being arranged adjacent to one another.

9. An automotive light according to claim 8, **characterised in that** said LASER projection device (4) additionally comprises an electronic control unit (8) which is able to activate the various LASER projectors (6) sequentially, so as to trace out/draw in sequence said luminous patterns of predetermined shape (d).

10. An automotive light according to any one of the preceding claims, **characterised by** additionally comprising a substantially basin-shaped, rear casing (2) which is structured so as to be stably fixed on the vehicle body (101), and a front half-shell (3) which is placed to close the mouth of the rear casing (2) and is provided with at least one transparent or semi-transparent portion (3a); said LASER projection device (4) being arranged inside the rear casing (2), in front of a corresponding transparent or semi-transparent portion of the front half-shell (3).

11. An automotive light according to claim 10, **characterised in that** the front half-shell (3) is provided with two or more transparent or semi-transparent portions; and **in that** the automotive light (1) also comprises at least one auxiliary lighting assembly (5) which is located inside the rear casing (2), directly facing a corresponding transparent or semi-transparent portion of the front half-shell (3), and is able to backlight the same transparent or semi-transparent portion of the front half-shell (3).

12. An automotive light according to claim 11, **characterised in that** said auxiliary lighting assembly (5) comprises a series of LED diodes (15) which are arranged spaced apart and side by side to one another inside the rear casing (2), and are oriented so as to direct the light produced towards the corresponding transparent or semi-transparent portion of the front half-shell (3).

13. An automotive light according to claim 11 or 12, **characterised in that** the switching on of said auxiliary lighting assembly (5) is simultaneous to and/or synchronized with the activation of said LASER projection device (4).

14. An automotive light according to any one of the preceding claims, **characterised in that** said output laser beams (r) emitted by said LASER projector (6) are stationary in space.

15. A motor vehicle (100) for transporting items and/or people provided with a vehicle body (101), with an engine and with ground-resting wheels (102), and **characterised by** additionally comprising an automotive light (1) realized according to any one of claims 1 to 14.
